# EUROPEAN PATENT APPLICATION

(11) **EP 2 390 294 A1**
(43) Date of publication of application: **30.11.2011**
(21) Application number: 10163939.1
(22) Date of filing: 26.05.2010
(51) Int. Cl.: C09D 13/00

(54) **Pencils, method of preparation and use**

(71) Applicant: Université Catholique de Louvain, 1348 Louvain-La-Neuve (BE); Chevron Phillips Chemicals International N.V., 3090 Overijse (BE)
(72) Inventor: Biebuyck, Jean-Jacques, 1330 Rixensart (BE); Daoust, Daniel, 1325 Chaumont-Gistoux (BE); Sclavons, Michel, 1200 Woluwe-St-Lambert (BE); Heerbrant, Marc, 1650 Beersel (BE)
(74) Representative: Bounaga, Sakina

(57) **Abstract**

The present invention relates to a pencil comprising a core within a barrel, wherein the barrel composition consists of (a) at least one styrene-butadiene copolymer, (b) at least one styrene-butadiene-styrene block copolymer, (c) at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent, a foaming agent, a coloring agent, a wax, or a combination thereof. The present invention also relates to a method for the preparation of said pencil and to the use thereof.

## Description

### Field of the invention

The present invention relates to pencils, method for production of pencils and to their use.

### Background of the invention

Conventional pencils consist of a central core of a "lead" material set within a tubular external tube or barrel which is traditionally made of wood. Wood has desirable properties for this purpose because it can be easily cut away or sharpened to reveal fresh core material or "lead" when the latter has been used up. The pencils presently available however are unsatisfactory for a number of reasons.

For example, the current process for making wooden pencils, which includes laying an extruded graphite insert in a groove longitudinally extending in one half of the wooden sheath, is expensive and requires considerable work and special conditions. The sheath-half containing the graphite insert and the corresponding opposite sheath-half are then coated with an adhesive such as glue and pressed to fit together until dried and set and then undergo a lacquering operation. This process is expensive, requires multiple steps, and is time consuming. For example, lacquering requires approximately four to twelve passes through a paint line to achieve a desired coating.

Also, only certain types of wood possess the required properties to be used in the manufacture of pencils and those wood varieties are generally expensive. Cedar is most commonly used, although basswood and pine are sometimes used in pencil manufacture.

Manufacture and use of wooden pencils can also cause health hazards. By way of example, saw dust and other scraps are generated during the pencil manufacturing process, especially during the grooving and shaping of the wooden sheath. As a result, a dust collector is used to collect the saw dust and can cause respiratory problems if not handled correctly. Also, the adhesive and lacquer used in the manufacturing process can cause health problems due to their solvent base.

While in use, pencils having wood casings are also subject to splintering when broken thereby posing a danger, especially to young children. Colored coatings may comprise metal based pigments which on chewing of the coated pencil are ingested.

The safety problems caused by wooden shafts imposed the development of alternative barrel materials.

Pencils containing reclaimed rubber have been proposed. However, rubber compositions proposed are observed to be inadequate with regard to a good sharpenability. Moreover, rubber compositions bring health and safety concerns due to the use of vulcanizing agents such as organic amines, accelerators such as dithiocarbamates and scorch retardants.

Pencils based on thermoformable plastics have been proposed. However, plastic compositions proposed are observed to be inadequate with regard to safety due to the use of plasticizers such as phthalates or antidegradants such as phenols, quinolines or carbonylamines.

There remains a need in the market to further improve the properties of pencils, in particular that do not pose health hazards, and which can be manufactured relatively inexpensively without generating sizable quantities of waste while and minimizing health hazards in manufacture and in use. It will be appreciated that there also exists a need for pencils that are relatively durable, with good sharpenability and that will not easily break. It is accordingly one of the objects of the present invention to overcome or ameliorate at least one of the disadvantages of the prior art, or to provide a useful alternative.

### Summary of the invention

It has now been found that safety concerns can be minimized by providing a pencil suitable for writing, drawing, and/or cosmetic purpose comprising a barrel made of a specific combination of polymers, in particular the combination of at least one styrene-butadiene copolymer with at least one styrene-butadiene-styrene block copolymer, and with at least one other polymer selected from styrene homopolymer or styrene-acrylonitrile polymer, acrylonitrile-butadiene-styrene polymer, acrylic-styrene-methylmethacrylate copolymer, or a combination thereof, and optionally at least one additive.

In an embodiment, the composition used for the barrel is (substantially) transparent. The barrel preferably consists of a blend of at least one transparent styrene-butadiene copolymer with at least one transparent styrene-butadiene-styrene block copolymer, and with at least one other transparent polymer selected from styrene polymer, styrene-acrylonitrile polymer, acrylonitrile-butadiene-styrene polymer, acrylic-styrene-methylmethacrylate copolymer, or a combination thereof, and optionally at least one additive selected from a filler, a porogen (porosity generators), a blowing agent, a foaming agent, a colorant, a wax, a stabilizer, or a combination thereof. The present blend of polymers has the advantage of being compatible and forms only one phase within the blend. This particular selection of polymers does not impair the transparency of the barrel, and improves the sharpenability of the pencil compared to prior art pencils.

The present invention therefore relates to a pencil comprising a core within a barrel, wherein the barrel composition consists of (a) at least one styrene-butadiene copolymer, (b) at least one styrene-butadiene-styrene block copolymer; (c) at least one other polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent, a foaming agent, a coloring agent, a wax, a stabilizer, or a combination thereof.

Unlike the traditional plastic pencils, the pencils of the present invention are easy to sharpen. In addition the pencils according to the invention do not splinter when broken and are therefore suitable for young children. The present pencils are also safe to use as cosmetic pencil.

The present invention further relates to the use of pencils according to the invention as writing, drawing or coloring pencil, and/or as cosmetic pencil.

Unlike in some prior art barrel compositions for the manufacturing of pencils, the pencils of the present invention do not require the use of a solvent releasing volatile organic carbons (VOC), or vulcanizing agent. The pencils of the present invention are in compliance with EN71.3, the European Standard for Safety of Toys. The present pencils also meet the requirement of the EEC Directive for food contact 2002/72/EC. The cosmetic pencils according to the invention are also in compliance with EN ISO 22716:2007 the European Standard for cosmetics.

The present invention also relates to a method for producing pencils comprising the step of: providing a barrel forming composition and a core forming material and forming a pencil,

wherein the barrel forming composition consists of (a) at least one styrene-butadiene copolymer, (b) at least one styrene-butadiene-styrene block copolymer; and (c) at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent, a foaming agent, a coloring agent, a wax, or a combination thereof.

In an embodiment of said method, the barrel forming composition is first formed into a barrel by extrusion, injection molding, injection blow molding, extrusion blow molding, or thermoforming, and then the pencils can be produced by introducing into the formed barrel a core forming material. In another embodiment of said method, the core forming material and the barrel forming composition are co-extruded.

The present invention also relates to a method as described above for producing pencils according to the present invention.

The pencils of the present invention eliminate major downtime during manufacture, are straight forward to make, do not require the use of a large range of additives, and they are based on easily accessible raw materials, hence creating a more cost-effective product.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### Detailed description

The present invention relates to pencils comprising a core within a barrel, the barrel consisting of at least one styrene-butadiene copolymer; at least one styrene-butadiene-styrene block copolymer; and at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally at least one additive selected from the group consisting of a filler, a porogen, a blowing agent, a foaming agent, a coloring agent, a wax, a stabilizer, or a combination thereof

When describing the barrel compositions for manufacturing the pencils of the present invention, the terms used are to be construed in accordance with the following definitions, unless a context dictates otherwise.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. Any numerical range recited herein is intended to include all sub-ranges subsumed therein.

As used in the specification and the appended claims, the singular forms "a", "an," and "the" include plural referents unless the context clearly dictates otherwise. By way of example, "a filler" means one filler or more than one filler.

As used herein, the term "core" is used interchangeably with the term "lead" and refers to a writing, drawing, coloring and or cosmetic core. The lead for a writing, coloring or drawing pen is usually a smooth thin stick of pigment or clay which can be formed from powdery coloring agent such as graphite, charcoal, organic pigment, and the like, and which can be optionally bound with a thermoplastic resin. When made with a thermoplastic resin, such a core can be made by extruding, through one or more orifices of the required size, for example 2 mm in diameter, the melt of a homogeneous mixture of the thermoplastic resin, the powdery coloring agent, and if necessary, a hardness adjuster. For cosmetic use, the core is usually a soft lead. A material for a soft lead may for example refer to eye shadow or lipstick. The cosmetic core may be obtained by combining about 60 to about 80 weight % (wt%) of an oil component, such as for example animal plant oil and fat, wax, Vaseline®, liquid paraffin, surfactant and the like, with about 20 to about 40 wt% colorants, such as for example, pigment or dye of black, gray, green, blue or like other colors, and further an adequate amount of perfume and antioxidant.

According to the present invention, the barrel composition consists of (a) at least one styrene-butadiene copolymer, (b) at least one styrene-butadiene-styrene block copolymer; (c) at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent, a foaming agent, a coloring agent, a wax, a stabilizer, or a combination thereof

As used herein the term "styrene-butadiene copolymer" or "copolymer of styrene and butadiene" or "polymerization product of styrene and butadiene monomers" are used interchangeably.

Suitable styrene-butadiene copolymers for use in barrel composition of the present pencil, are in general copolymers made by the reaction of styrene and 1,3-butadiene. Said copolymer may comprise an antioxidant in a concentration equal or below to 1.5 % by weight of the copolymer. In an embodiment, the styrene-butadiene copolymer comprises a branched styrene-butadiene copolymer.

Suitable non-limiting examples of styrene-butadiene copolymers with high styrene content ( >60 %) are available commercially from Chevron Phillips Chemical Company LP under the trademark K-Resin styrene-butadiene copolymers (SBC), from BASF SE under the trademark Styrolux, Styroflex, and Styroclear, from the company Asahi Kasei Chemicals under the tradename Asaflex, from Denka (DENKI KAGAKU KOUGYO KABUSHIKI KAISYA ) under the tradename Clearen . In an embodiment of the present invention the styrene-butadiene copolymer is an amorphous copolymer.

Suitable non-limiting examples of styrene-butadiene copolymers of low styrene content (< 60%) are available commercially from Firestone under the trademark Stereon, and from Dynasol Elastomers, or Negromex, or Repsol under the trademark Solprene or Calprene, from the company Kraton, under the tradename Kraton, from the company Enichem under the tradename SOL, from the company Asahi Kasei Chemicals under the tradename Asaprene, or Tufprene, and from the company Fina under the tradename Finaprene,

In a certain embodiment the styrene-butadiene copolymer can comprise from about 30 to about 90 wt% of styrene and 10 wt% to about 70 wt% of butadiene based on the total weight of the copolymer. For example, suitable styrene-butadiene copolymer can comprise from about 35 to about 85 wt% of styrene and about 15 wt% to about 65 wt% of butadiene based on the total weight of the copolymer. For example, suitable styrene-butadiene copolymer can comprise from about 60 to about 90 wt% of styrene and about 10 wt% to about 40 wt% of butadiene based on the total weight of the copolymer. For example, suitable styrene-butadiene copolymer can comprise from about 40 to about 80 wt% of styrene and about 20 wt% to about 60 wt% of butadiene based on the total weight of the copolymer. For example, suitable styrene-butadiene copolymer can comprise from about 50 to about 78 wt% of styrene and about 22 wt% to about 50 wt% of butadiene based on the total weight of the copolymer.For example, suitable styrene-butadiene copolymer can comprise from about 60 to about 78 wt% of styrene and about 22 wt% to about 40 wt% of butadiene based on the total weight of the copolymer. For example, suitable styrene-butadiene copolymer can comprise from about 70 to about 78 wt% of styrene and about 22 wt% to about 30 wt% of butadiene based on the total weight of the copolymer. Preferably, the styrene-butadiene copolymer can comprise from about 70 to about 76 wt% of styrene and about 24 to about 30 wt% of butadiene based on the total weight of the copolymer. More preferably, the styrene-butadiene copolymer can comprise from about 73 to about 76 wt% of styrene and about 24 to about 27 wt% of butadiene based on the total weight of the copolymer. Most preferred styrene-butadiene copolymer contains 75 (±1 ) wt% of styrene and 25 (±1 ) wt% of butadiene based on the total weight of the copolymer.

Preferred styrene-butadiene copolymers are Chevron Phillips' K-Resin KR01, KR03, KR03NW, KR05, KR05NW, KR10, BK10, XK40, and KR99HG, or a combination of one or more of said copolymers; more preferably KR01, KR03, KR05, or KR10, or a combination thereof.

In an embodiment of the present invention the barrel composition comprises from about 45 to about 75 wt% of the styrene-butadiene copolymer, based on the total weight of the barrel composition. For example, said styrene-butadiene copolymer can be present in an amount of about 50 to about 70 wt%, based on the total weight of the barrel composition. For example, said styrene-butadiene copolymer can be present in an amount of about 50 to about 65 wt%, based on the total weight of the barrel composition. For example, said styrene-butadiene copolymer can be present in an amount of about 50 to about 60 wt%, based on the total weight of the barrel composition. For example, said styrene-butadiene copolymer can be present in an amount of 50 (±2) wt%, 55 (±2) wt%, 60 (±2) wt%, 65 (±2) wt%, 70 (±2) wt%, 75 (±2) wt%, wt% based on the total weight of the barrel composition.

In addition to the styrene-butadiene copolymer, the barrel composition also contains at least one styrene-butadiene-styrene block copolymer.

As used herein, the term "block copolymer" means that the copolymer is prepared by block polymerization using an anionic initiator, such as an alkyl lithium, especially butyl lithium. In a block polymerization, one monomer, e.g. styrene, is initially polymerized, followed by the polymerization of other monomer, e.g. butadiene. The resulting "blocks of styrene polymer and butadiene polymer can provide a styrenic block copolymer. These polymers may be diblock (e.g. styrene-butadiene) or multiblock (e.g. styrene-butadiene-styrene).

In an embodiment of the present invention the styrene-butadiene-styrene block copolymer is an amorphous block copolymer. The use of a block copolymer can provide high impact strength to a barrel. Suitable styrene-butadiene-styrene block copolymers for use in the structures of this invention can contain blocks of styrene and blocks of butadiene with from about 30 to 55 wt% bound styrene and a number average molecular weight of from about 50.000 to about 100.000. Suitable non-limiting examples of styrene-butadiene-styrene copolymers are available commercially from Kraton Polymers under the trademark Kraton, Preferred styrene-butadiene-styrene block copolymers are Kraton D SBS 1155, 1155ES D1101, D1102, D1102SC, D1118A, or D1133.

In an embodiment of the present invention the barrel composition comprises from about 5 to about 15 wt% of at least one styrene-butadiene-styrene block copolymer based on the total weight of the barrel composition. For example, said styrene-butadiene-styrene block copolymer can be present in an amount of about 6 to about 14 wt%, based on the total weight of the barrel composition. For example, said styrene-butadiene-styrene block copolymer can be present in an amount of about 7 to about 13 wt% based on the total weight of the barrel composition. For example, said styrene-butadiene-styrene block copolymer can be present in an amount of about 8 to about 12 wt% based on the total weight of the barrel composition. For example, said styrene-butadiene-styrene block copolymer can be present in an amount of 5 (±2) wt%, 7 (±2) wt%, 10 (±2) wt%, 12 (±2) wt%, 15 (±2) wt%, based on the total weight of the barrel composition. Preferably said composition comprises 10 (±2) wt% of at least one styrene-butadiene-styrene block copolymer based on the total weight of the barrel composition.

In addition to the styrene-butadiene copolymer, and to the styrene-butadiene-styrene block copolymer, the barrel composition also comprises at least one other polymer selected from styrene polymer, styrene-acrylonitrile polymer, acrylonitrile-butadiene-styrene polymer, acrylic-styrene-methylmethacrylate copolymer, or a combination thereof.

In an embodiment of the present invention the barrel composition comprises from about 15 to about 45 wt% of said at least one other polymer, based on the total weight of the barrel composition. For example, said at least one other polymer can be present in an amount of about 17 to about 40 wt%, based on the total weight of the barrel composition. For example, said at least one other polymer can be present in an amount of about 20 to about 40 wt% based on the total weight of the barrel composition. For example, said at least one other polymer can be present in an amount of about 30 to about 40 wt% based on the total weight of the barrel composition. For example, said at least one other polymer can be present in an amount of 15 (±2) wt%, 20 (±2) wt%, 25 (±2) wt%, 30 (±2) wt%, 35 (±2) wt%, 40 (±2) wt% or 45 (±2) wt% based on the total weight of the barrel composition.

In an embodiment, said at least one other polymer is a styrene polymer. As used herein, the term "styrene polymer" refers to polystyrene or poly(p-methylstyrene). The styrene polymer is preferably polystyrene or poly(p-methylstyrene), more preferably general purpose polystyrene. In an embodiment of the present invention the styrene is syndiotactic polystyrene. As used herein, the term "syndiotactic polystyrene" refers to semicrystalline polymer synthesized from styrene monomer using a single-site catalyst, such as metallocene. Syndiotactic polystyrene shows side chains arranged in symmetrical, regularly alternating pattern on either side of the polymer backbone. Non-limiting examples of suitable syndiotactic polystyrene polymers are available from Idemitsu, under the trademark Xarec SPS.

In an embodiment, said at least one other polymer is a styrene-acrylonitrile copolymer. As used herein, the term "styrene-acrylonitrile copolymer" or "SAN" refers to copolymers made by the reaction of styrene and an acrylonitrile. The term "styrene" also includes other vinyl aromatic monomers such as alpha-methylstyrene or para-methylstyrene, used alone or in combination with pure styrene. Non-limiting examples of suitable styrene-acrylonitrile copolymers are commercially available from Bayer under the trademark Lustran, from BASF under the trademark Luran, from Dow under the trademark Tyril, from Enichem under the trademark Kostil.

Suitable SAN copolymers exhibit a number average molecular weight in the range of about 50.000 to about 200.000 and contain at least about 50 wt% of copolymerized styrene, for example from about 60 to about 80 wt% of copolymerized styrene, and the balance acrylonitrile. Suitable SAN copolymers contain about 20 to 35 wt% of polymerized acrylonitrile.

In an embodiment, said at least one polymer is an acrylic-styrene-methylmethacrylate copolymer.

As used herein, the term "acrylic-styrene-methylmethacrylate copolymer" or "acrylic SMMA" refers to copolymers made by the reaction of styrene-methylmethacrylate and acrylonitrile. Non-limiting examples of suitable styrene-acrylonitrile copolymer are commercially available from Nova Chemicals or Ineos Nova under the trademark NAS, such as the NAS 21 (20% acrylate content) or NAS 30 (30 % acrylate content), or from Ineos Nova under the trademark ZYLAR such as ZYLAR 530 or from Sanyo Chemical Indus. under the trademark MS 600 (50% acrylate content).

In an embodiment, said at least one polymer is an acrylonitrile-butadiene-styrene polymer.

As used herein, the term "acrylonitrile-butadiene-styrene polymer" or "ABS" refers to copolymers made by the reaction of styrene, acrylonitrile and butadiene.

The barrel composition according to the invention may contain other additives provided they do not significantly adversely affect the sharpenability and/or splintering properties of the composition, and more particularly pencil produced from them.

For example, the barrel composition may comprise an additive selected from the group comprising a filler, a foaming agent, a colorant, a porogen, a wax, and a combination thereof. The additive can be present in an amount of 0 to about 20 wt% based on the total weight of the barrel composition.

In an embodiment of the present invention, the barrel composition may contain a filler. The filler can be present in an amount of 0 to about 20 wt% based on the total weight of the barrel composition.

Adding a filler has the advantages of adding mechanical strength and durability to the barrel. Adding a filler helps to vary, within wide ranges, the consistency of the polymer composition, in particular of a barrel made from it. Use of a filler also improves adhesion between polymers and/or between barrel and lead.

The filler may be any suitable filler known in the art such as for example silica (silicon dioxide), siliceous sand, silicon carbide, aluminum oxide, aluminum/iron oxide, barium sulfate, boron nitride, boron powder, calcite and clays, corundum particles, garnet, glass, ground limestone, ground walnut shells gypsum, kaolin, magnesium oxide, metal grains, micas, mixture of chlorite (hydrosilicate of magnesium, potassium and aluminum) mica and quartz, nepheline syenite (anhydrous sodium potassium aluminum silicate), particles of plastic materials, particles of pumice stone, perlite, quartz, rubber chips, slag, talc, tungsten carbide powder, waste plastic aggregate, wollastonite or a combination thereof. Preferably the filler is a transparent mineral filler.

Preferably said filler is an inorganic nanoparticles. More preferably, said filler is selected from silica, alumina, or zirconia (the term "zirconia" includes zirconia metal oxide) nanoparticles, preferably silica nanoparticles. In some embodiments, the nanoparticles have a mean diameter in a range from 1 to 500 nm, or 1 to 200 nm, or 5 to 150 nm, or 5 to 125 nm. Nanoparticles can be present in an amount of 0 to about 20 wt% based on the total weight of the barrel composition.

Useful silica nanoparticles are commercially available from Nalco Chemical Co. (Naperville, IL) under the product designation NALCO COLLOIDAL SILICAS. For example, silicas include NALCO products 1040, 1042, 1050, 1060, 2327 and 2329. Useful zirconia nanoparticles are commercially available from Nalco Chemical Co. (Naperville, IL) under the product designation NALCO OOSSOO8.

For influencing the tactile properties of the outer surface of the barrel, fillers can be selected such as for example hollow aluminum silicate beads, expanded hollow beads, soft-feel polyurethane beads, micronized plastics, or a combination thereof.

In an embodiment of the present invention the barrel composition may contain a blowing agent. Non-limiting examples of suitable blowing agent can be selected from azodicarbonamide, hydrazine derivatives like for example 4,4'-oxybis (benzene sulfohydrazide); diphenylsulfone-3,3'-disulfohydrazide and trihydrazinotriazine; semi carbides such as p-toluylenesulfonyl semicarbide; tetrazoles such as 5-phenyltetrazole; benzoxazines such as isatoic anhydride; citric acid or potassium bicarbonate. In an embodiment the blowing agent is citric acid or potassium bicarbonate, as both have low toxicity.

The amount of blowing agent in the present composition of the barrels can typically range from about 0 to 10 wt%, such as about 0 to about 5 wt %, preferably about 0 to 1 wt % based on the total weight of the barrel composition.

In an embodiment of the present invention the barrel composition may comprise a foaming agent. The amount of foaming agent in the present compositions can typically range from about 0 to 10 wt%, such as about 0 to about 5 wt %, preferably about 0 to 1 wt % based on the total weight of the barrel composition. Non limiting examples of suitable foaming agent are azo-bis-isobutylnitrile and azodicarbonamide.

In certain embodiments of the present invention the barrel composition of the pencil according to the invention contains at least one colorant.

The colorant may comprise one or more inorganic or organic, transparent or non-transparent pigments. Non-limiting examples of such pigments are titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, quinacridones and diketo-pyrrolopyrroles; and extender pigments including ground and crystalline silica, barium sulfate, magnesium silicate, calcium silicate, mica, micaceous iron oxide, calcium carbonate, zinc oxide, aluminum hydroxide, aluminum silicate and aluminum silicate, gypsum, feldspar, talcum, kaolin, and the like.

The amount of colorant that is used to color the barrel is understood to vary, depending on the particular application, and can be zero when a clear and transparent barrel is desired. For example, a barrel composition may comprise up to 10 % by weight of colorant. Depending on the particular end use, the barrel composition may comprise about 0 to 10 wt%, such as about 0 to about 5 wt %, preferably about 0 to 1 wt % of colorant based on the total weight of the composition.

In an embodiment of the present invention, the barrel composition may contain a porogen. Non limiting examples of suitable porogens can be selected from isobutanol, 4-methyl-2-pentanol or unsubstituted poly(alkylene)glycol. In a preferred embodiment the porogen is a polypropylene glycol.

The amount of porogen in the present composition of the barrels can typically range from about 0 to 10 wt%, such as about 0 to about 5 wt %, preferably about 0 to 1 wt % based on the total weight of the composition. Addition of a porogen can provide a barrel with micro-cavities or decorative bubbles.

The barrier properties of the barrel can be further improved by adding to the composition a certain amount of wax. The amount of wax in the present compositions can typically range from about 0 to about 10 wt%, for example about 0 to about 5 wt%, for example about 0.01 to about 5 wt %, preferably about 1 to 4 wt % based on the total weight of the composition. Within this range the wax reduces the water vapor transmission rate (WVTR) of barrels made from the compositions at least by 10%, preferably at least by 20%, more preferably at least by 50%, compared to compositions without wax. Similarly, the wax reduces the oxygen transmission rate (OTR) of barrels made from the compositions at least by 10%, preferably at least by 20%, more preferably at least by 50%, compared to compositions without wax. A reduced WVTR and/or OTR are particularly useful for barrels comprising a lead that is prone to degradation by moisture or light, such as a cosmetic material. Use of a barrel with reduced WVTR and/or OTR may prevent a lead material becoming soft or may protect against discoloration of the barrel and/or lead.

The wax may be any suitable wax known in the art such as for example, a paraffin wax, a microcrystalline wax or semi-microcrystalline wax (also called intermediate wax, as it has characteristics of both paraffin and microcrystalline waxes). Suitable paraffin waxes, can have an average chain length between about 20 and 45 carbon atoms, and a melting point between 50 and 75°C. Preferred is a microcrystalline wax. Said microcrystalline wax can be provided in a blend with the styrene-butadiene copolymer. Non limiting examples of suitable styrene-butadiene copolymer containing microcrystalline wax include Chevron Phillips' K-Resin KR03, KR05 and KR10.

In a particular embodiment , the present invention provides a pencil having a core within a barrel, the barrel composition consisting of (a) at least one styrene-butadiene copolymer, (b) at least one styrene-butadiene-styrene block copolymer; (c) at least one styrene polymer, preferably polystyrene; and optionally (d) at least one additive selected from the group consisting of a filler, a porogen, a blowing agent, a foaming agent, a coloring agent, a wax, or a combination thereof.

In a particular embodiment , the present invention provides a pencil having a core within a barrel, the barrel composition consisting of (a) at least one styrene-butadiene copolymer; (b) at least one styrene-butadiene-styrene block copolymer; (c) at least one styrene-acrylonitrile polymer; and optionally (d) at least one additive selected from the group consisting of a filler, a porogen, a blowing agent, a foaming agent, a coloring agent, a wax, or a combination thereof.

In a particular embodiment, the present invention provides a pencil having a core within a barrel, the barrel composition consisting of (a) at least one styrene-butadiene copolymer; (b) at least one styrene-butadiene-styrene block copolymer; (c) at least one acrylic-styrene-methylmethacrylate copolymer; and optionally (d) at least one additive selected from the group consisting of a filler, a porogen, a blowing agent, a foaming agent, a coloring agent, a wax, or a combination thereof.

In a particular embodiment, the present invention provides a pencil comprising a core within a barrel, wherein the barrel composition consists of: about 45 to about 75 wt% of at least one styrene-butadiene copolymer; about 5 to about 15 wt% of at least one styrene-butadiene-styrene block copolymer; about 15 to about 45 wt% of at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally about 0 to about 20 wt% of at least one additive selected from the group consisting of a filler, a porogen, a blowing agent, a foaming agent, a coloring agent, a wax, or a combination thereof.

In a preferred embodiment, said barrel composition consists of: about 50 to about 70 wt% of at least one styrene-butadiene copolymer; about 8 to about 12 wt% of at least one styrene-butadiene-styrene block copolymer; about 20 to about 40 wt% of at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally about 0 to about 5 wt% of at least one additive selected from the group consisting of a filler, a porogen, a blowing agent, a foaming agent, a coloring agent, a wax, or a combination thereof.

In a preferred embodiment, said barrel composition consists of: about 50 to about 60 wt% of at least one styrene-butadiene copolymer; about 10 wt% of at least one styrene-butadiene-styrene block copolymer; about 30 to about 40 wt% of at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally about 0 to about 5 wt% of at least one additive selected from the group consisting of a filler, a porogen, a blowing agent, a foaming agent, a coloring agent, a wax, or a combination thereof.

Examples of suitable barrel composition for the pencil according to the invention consist of about 50 wt% of at least one styrene-butadiene copolymer; about 10 wt% of at least one styrene-butadiene-styrene block copolymer; about 40 wt% of at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally at least one additive selected from the group consisting of a filler, a porogen, a blowing agent, a foaming agent, a coloring agent, a wax, or a combination thereof.

Examples of suitable barrel composition for the pencil according to the invention consist of about 60 wt% of at least one styrene-butadiene copolymer; about 10 wt% of at least one styrene-butadiene-styrene block copolymer; about 30 wt% of at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally at least one additive selected from the group consisting of a filler, a porogen, a blowing agent, a foaming agent, a coloring agent, a wax, or a combination thereof.

In a particular embodiment, the present invention provides a pencil having a core within a barrel, the barrel composition consisting of at least one styrene-butadiene copolymer; at least one styrene-butadiene-styrene block copolymer, at least one polymer selected from the group consisting of styrene polymer, styrene-acrylonitrile polymer, acrylonitrile-butadiene-styrene polymer, acrylic-styrene-methylmethacrylate copolymer, or a combination thereof; and at least one additive selected from the group consisting of a filler, a blowing agent, a foaming agent, a colorant, a porogen and/or a wax

In a particular embodiment, the present invention provides a pencil having a core within a barrel, the barrel composition consisting of: at least one styrene-butadiene copolymer; at least one styrene-butadiene-styrene block copolymer, at least one polymer selected from the group consisting of styrene polymer, styrene-acrylonitrile polymer, acrylonitrile-butadiene-styrene polymer, acrylic-styrene-methylmethacrylate copolymer, or a combination thereof; and at least one filler, preferably an inorganic nanoparticles.

The barrel composition can contain other additives, for example chemical stabilizers, processing aids and additives which increase the melt strength or the stiffness of the finished barrel composition.

The external shape of pencils according to the invention can be substantially cylindrical or ellipsoidal in cross section, or they can be polygonal in cross section, for example substantially triangular, hexagonal or octagonal, or they can be in an ergonomical shape designed to comfortably fit and conform with the general structural features of the left and/or the right human hand.

The barrel of pencils according to the invention can be provided with a non-slip type of surface finish or be encased in a thin sheet of rubber or soft plastic to prevent slippage during use.

The pencils according to the invention can be sharpened at both extremes of the barrel and may be suitable for their intended use, such as writing, at both ends of the pencil.

The pencils according to the invention can be provided at one or both ends with at least one cap. The pencils according to the invention can also be provided at one end with an eraser.

In an embodiment of the present invention the barrel is substantially transparent. The term "substantially transparent" as used herein it is meant to encompass those barrels which allow a viewer to perceive lettering of at most 15 points through the barrel.

Through a transparent barrel the color tone of the lead stored in the shaft can be distinguished from the outside. Hence, the application of a colored layer to the outside surface of a barrel to indicate to the user the color tone of the lead, can be avoided. Consequently, the use of a solvent containing coating to make a color coded layer covering a barrel, can also be avoided. With the present type of barrel it is also possible to view glitterings, colored particles or other materials incorporated in the shaft to provide a visual effect, from the outside.

The barrel composition for use in the invention can be formed into a barrel by extrusion, injection molding, injection blow molding, extrusion blow molding, or thermoforming.

Preferably, the barrels of the present pencils are formed by injection molding or extrusion.

In an embodiment, the pencils can be produced by introducing into the barrel a core forming material. Filling of a core material may be carried out in a back filling method by filling the shaft within the barrel of a pencil from the rear end after the material has been heated and added with flowability.

In an embodiment, the method for producing pencils comprises the step of: co-extruding a core forming material and a barrel forming composition, wherein the barrel forming composition consists of (a) at least one styrene-butadiene copolymer, (c) at least one styrene-butadiene-styrene block copolymer; (b) at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent, a foaming agent, a coloring agent, a wax, or a combination thereof.

In an embodiment of the present invention the pencils can as a result be obtained in a single step.

In an embodiment, said method produces pencils according to the present invention as described hereinabove.

The inventors have found that the method of the invention is particularly advantageous for the production of soft lead pencils or crayons. The barrel composition prevents that differences in coefficient of expansion between the barrel and lead during solidification and cooling of the extruded pencil lead to cracks in the lead. This is particularly advantageous for the production of cosmetic pencils, where leads typically have a soft structure (soft leads), poor mechanical strength and typically a diameter larger than a lead in a pencil for writing. The present barrel when they are used to hold cosmetic material, have also the advantage to act as a barrier to moisture, oxygen and aroma.

The barrel can be decorated and/or printed thereon by conventional processes using inks designed for styrenes. Non-limiting examples of suitable inks are inks used in silk screening, dry offset and flexographic printing as well as label transfer processes.

In another aspect, the present invention relates to the use of a pencil according to the invention, as writing, drawing or coloring pencil. The present pencils are particularly suitable for children.

The present pencils can be easily cut by a commercially sold knife or sharpener (pencil sharpener) and the like.

In another aspect, the invention relates to the use of a pencil according to the invention, as cosmetic pencil. Cosmetic pencils according to the invention can be typically used for the topical application of a cosmetic material. The cosmetic material can be put in contact with sensitive areas such as an eye lid or facial skin followed by the transfer of the cosmetic material to the skin. The present pencils have the advantage of not turning to shards and splinters when sharpened. The present pencils according to the invention are therefore particularly safe and painless for the application of a cosmetic material.

The following examples illustrate the present invention.

### Example 1

Unless otherwise indicated, all parts and all percentages in the following examples, as well as throughout the specification, are parts by weight or percentages by weight respectively.

Hereinafter, the term "SAN" means styrene-acrylonitrile copolymer, the term "NAS®" refers to an acrylic-styrene-methylmethacrylate copolymer from Nova Chemicals, the term "SBS" means styrene-butadiene-styrene block copolymer and the term "SBC" means styrene-butadiene copolymer. Chevron Phillips' K-Resin KR01 was used as styrene-butadiene copolymer (free microcrystalline wax).

Rods were produced by extrusion in a single screw extruder of the blends listed in Table 1. Rods n° 2 to 5 were produced using barrel compositions according to embodiments of the present invention. Rods 1, 6 are 7 are comparative examples. The sharpenability of the produced rods was rated as 1 for average, 2 for good, 3 for very good and 4 for excellent. The transparency of the produced rods measured according to the ASTM D1003 standard was acceptable (OK).

**Table 1**

| Rod N° | Styrene-butadiene copolymer KR01 wt% | SBS Kraton 1155ES wt% | SAN wt% | Sharpenability | Transparency |
|---|---|---|---|---|---|
| 1 | 90 | 10 | 0 | 1 | OK |
| 2 | 70 | 10 | 20 | 2-3 | OK |
| 3 | 60 | 10 | 30 | 4 | OK |
| 4 | 65 | 10 | 25 | 3 | OK |
| 5 | 50 | 10 | 40 | 4 | |
| 6 | 80 | | 20 | 1-2 | OK |
| 7 | 70 | | 30 | 1-2 | OK |

The results of Table 1 showed that compared to comparative rods 1, 6 and 7, improved sharpenability was obtained in the presence of the SAN and SBS polymers for rods 2, 3, 4 and 5 according to embodiments of the present invention.

### Example 2:

Rods are produced by extrusion in a single screw extruder of the blends listed in Table 2. The compositions listed in Table 2 are suitable to produce pencils according to the invention.

**Table 2**

| Rod N° | Styrene-butadiene copolymer KR01 wt% | SBS Kraton 1155ES wt% | SBS Kraton D1102CS wt% | SBS Kraton D1118AS wt% | SAN wt% | NAS® wt% |
|---|---|---|---|---|---|---|
| 8 | 65 | 10 | 0 | 0 | 25 | 0 |
| 9 | 55 | 10 | 0 | 0 | 35 | 0 |
| 10 | 70 | | 10 | 0 | 20 | 0 |
| 11 | 50 | | 10 | 0 | 40 | 0 |
| 12 | 70 | 10 | 0 | 0 | 0 | 20 |
| 13 | 50 | 10 | 0 | 0 | 0 | 40 |
| 14 | 70 | 0 | 0 | 10 | 20 | 0 |
| 15 | 50 | 0 | 0 | 10 | 40 | 0 |

### Example 3

The compositions listed in Table 3 were used as the barrel composition to produce pencils according to embodiments of the invention. The pencils were produced by co-extruding the blends with a core forming polymer. The pencils can also be produced with a graphite core.

**Table 3**

| | Styrene-butadiene copolymer KR03 wt% | SBS Kraton 1155ES wt% | SAN wt% | Sharpenability | Transparency |
|---|---|---|---|---|---|
| Pencil 1 | 60 | 10 | 30 | 4 | OK |
| Pencil 2 | 50 | 10 | 40 | 4 | OK |

The results of Table 3 showed that pencils according to the invention exhibit excellent sharpenability.

## Claims

1. Pencil comprising a core within a barrel, wherein the barrel composition consists of (a) at least one styrene-butadiene copolymer, (b) at least one styrene-butadiene-styrene block copolymer, (c) at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent, a foaming agent, a coloring agent, a wax, or a combination thereof.

2. Pencil according to claim 1, wherein said barrel is substantially transparent.

3. Pencil according to any of claims 1 or 2, wherein said styrene-butadiene copolymer is an amorphous copolymer.

4. Pencil according to any of claims 1 to 3, wherein said styrene-butadiene copolymer contains from 60 to 78 wt% of styrene and 22 wt% to 40 wt% of butadiene based on the total weight of the copolymer.

5. Pencil according to any of claims 1 to 4, wherein the barrel composition comprises from 45 to 75 wt% of the styrene-butadiene copolymer based on the total weight of the barrel composition.

6. Pencil according to any of claims 1 to 5, wherein the barrel composition comprises from 15 to 45 wt% of said at least one other polymer, based on the total weight of the barrel composition.

7. Pencil according to any of claims 1 to 6, wherein said at least one polymer is styrene-acrylonitrile copolymer.

8. Pencil according to any of claims 1 to 6, wherein said at least one polymer is an acrylic-styrene-methylmethacrylate copolymer.

9. Pencil according to any of claims 1 to 8, wherein the barrel composition comprises from 5 to about 15 wt% of said at least one styrene-butadiene-styrene block copolymer based on the total weight of the barrel composition

10. Pencil according to any of claims 1 to 9, wherein said filler is an inorganic nanoparticles, preferably, said filler is selected from silica, alumina, or zirconia nanoparticles.

11. Use of a pencil according to any of claims 1 to 10, as writing, drawing or coloring pencil.

12. Use of a pencil according to any of claims 1 to 10, as cosmetic pencil.

13. Method of producing pencils comprising the step of:
providing a barrel forming composition and a core forming material and forming a pencil,
wherein the barrel forming composition consists of (a) at least one styrene-butadiene copolymer, (b) at least one styrene-butadiene-styrene block copolymer; and (c) at least one polymer selected from the group consisting of styrene polymer, styrene-acrylonitrile polymer, acrylonitrile-butadiene-styrene polymer, acrylic-styrene-methylmethacrylate copolymer, or a combination thereof; and optionally (d) at least one additive selected from the group consisting of a filler, a porogen, a blowing agent,
a foaming agent, a coloring agent, a wax, or a combination thereof.

14. Method according to claim 13, wherein the core forming material and the barrel forming composition are co-extruded.

15. Method according to claim 13 or 14, for producing pencils according to any of claims 1 to 10.
